# EUROPEAN PATENT APPLICATION

(11) **EP 4 718 253 A1**
(43) Date of publication of application: **01.04.2026**
(21) Application number: 25205898.7
(22) Date of filing: 30.09.2025
(51) Int. Cl.: G06F 9/50, G06F 8/60, G06F 8/71, G06F 11/34, G06Q 20/20, G07G 1/00

(54) **MULTI-TENANT POINT-OF-SALE (POS) SYSTEM**

(30) Priority: 30.09.2024 US 202418902450
(71) Applicant: NCR Voyix Corporation, Atlanta, GA 30308-1007 (US)
(72) Inventor: ANGEL, Michael Samoelov, Even Yehuda (IL)
(74) Representative: Secerna LLP

(57) **Abstract**

A multi-tenant point-of-sale (POS) system is provided that utilizes a single code base to support multiple tenants and accommodate varying network topologies. This system leverages a unified architecture that centralizes core functionalities while allowing for tenant-specific configurations, thereby eliminating the need for multiple software versions and reducing system complexity. By employing containerized microservices orchestrated via Kubernetes^{®}, the system adapts dynamically to different network conditions, ensuring optimal performance and reliability across diverse operational environments. This architecture not only simplifies system management and accelerates the deployment of updates but also enhances scalability and flexibility, making it ideal for modern retail operations that require robust, adaptable, and efficient multi-tenant POS solutions.

## Description

### Background

Existing multi-tenant solutions often struggle with scalability, flexibility, and efficiency due to their reliance on multiple code bases, and fragmented system architectures. These systems typically require extensive customization and separate maintenance for each tenant, leading to increased complexity, higher operational costs, and slower deployment of updates and new features. Additionally, traditional multi-tenant architectures may not effectively support varying network topologies, resulting in performance inconsistencies and limited adaptability to different operational environments. This can hinder a business's ability to provide a seamless and robust service across diverse geographical locations and network conditions, ultimately impacting user experience and operational efficiency.

### Summary

According to a first aspect of the present invention there is provided a method, comprising:
providing a single code base configured to support multiple tenants;
receiving a customization to a point-of-sale (POS) system;
applying the customization via configuration changes to the single code base without altering a source code of the single code base;
deploying a customized POS system to at least one edge processing environment associated with a specific tenant of the multiple tenants; and
synchronizing transaction data across the at least one edge processing environment and the multiple tenants during operation of the customized POS system.

Aptly, the method further comprises maintaining and managing the single code base on a cloud processing environment.

Aptly, the method further comprises monitoring, via a microservice associated with the single code base, performance metrics of the customized POS system for each of the multiple tenants and each of the edge processing environments.

Aptly, the method further comprises adjusting, via another microservice associated with the single code base, a hosting edge device associated with each of the edge processing environments for the customized POS system based on the performance metrics.

Aptly, the method further comprises maintaining operation of the customized POS system within the at least one edge processing environment when a wide-area network connection to and from the at least one edge processing environment is unavailable.

Aptly, wherein providing further includes providing the single code base as an operating system and a data schema agnostic code base.

Aptly, wherein providing further includes defining within the single code base a plurality of containerized microservices and workloads for the microservices.

Aptly, wherein applying further includes integrating at least a portion of the customized POS system with a third-party service based on the customization.

Aptly, wherein integrating further includes using an application programming interface to integrate interactions with the third-party service within the at least a portion of the customized POS system.

Aptly, wherein deploying further includes authenticating each of the multiple tenants and each edge processing environment before deploying the customized POS system.

Aptly, wherein deploying further includes deploying the customized POS system to a plurality of edge processing environments associated with the customization.

Aptly, wherein deploying further includes deploying the customized POS system to each edge processing environment with each edge processing environment including at least one hosting device that hosts the customized POS system, wherein the at least one hosting device includes one or more of a cloud processing environment, an on premises store server, and one or more store terminals.

According to a second aspect of the present invention there is provided a method, comprising:
configuring a point-of-sale (POS) system for multiple tenants associated with multiple edge processing environments using a single code base that allows for tenant and edge specific customizations;
deploying a configured POS system across the multiple edge processing environments and the multiple tenants;
monitoring performance of the configured POS system within each edge processing environment; and
dynamically adjusting the configured POS system responsive to performance metrics obtained during the monitoring.

Aptly, wherein configuring further includes using customizations provided by at least one store to obtain settings for the single code base and configuring the single code base with the settings to obtain the configured POS system.

Aptly, wherein monitoring further includes monitoring in real time response times and network availability associated with the configured POS system within each edge processing environment to obtain the performance metrics.

Aptly, wherein dynamically adjusting further includes dynamically scaling resources associated with the configured POS system responsive to the performance metrics.

Aptly, wherein dynamically adjusting further includes changing a hosting device for the configured POS system within at least one edge processing environment responsive to the performance metrics and based on an instruction received from a dashboard interface, an application programming interface, a configuration file, or an artificial intelligence management service.

Aptly, wherein changing further includes changing the hosting device from a cloud hosting device to an edge hosting device of the at least one edge processing environment when the performance metrics indicate that a network connection to the cloud hosting device is experiencing connectivity or responsiveness problems.

According to a third aspect of the present invention there is provided a system, comprising:
at least one processor and a non-transitory computer-readable storage medium having stored instructions which, when executed by the at least one processor, cause the at least one processor to:
maintain a single code base that supports multiple tenants of multiple edge processing environments;
receive a customization from the single code base;
configure the single code base with the customization to create a configured point-of-sale (POS) system;
deploy the configured POS system to the multiple edge processing environments and the multiple tenants; and
synchronize operational data associated with the configured POS system across the multiple edge processing environments and the multiple tenants as the configured POS system operates within the multiple edge processing environments.

Aptly, wherein the at least one processor is further configured to:
integrate workloads associated with the configured POS system with external application programming interfaces (APIs) for seamless data exchange and functionality extension with third-party services used by the multiple tenants and the multiple edge processing environments.

### Brief Description of the Drawings

FIG. 1 is a diagram of a system for a multi-tenant point-of-sale (POS) system that supports varying network topologies via a single code base, according to an example embodiment.
FIG. 2 is a diagram depicting capabilities and services provided from and supported by the multi-tenant POS system of FIG. 1, according to an example embodiment.
FIG. 3 is a diagram of an architecture for the multi-tenant POS system of FIG. 1 depicting varying network topologies, according to an example embodiment.
FIG. 4 is a diagram depicting interaction of microservices for the various network topologies of the multi-tenant POS system of FIG. 1, according to an example embodiment.
FIG. 5 is a flow diagram of a method for providing and operating a multi-tenant POS system via a single code base, according to an example embodiment.
FIG. 6 is a flow diagram of another method for providing and operating a multi-tenant POS system via a single code base, according to an example embodiment.
FIG. 7 is a flow diagram of a method for operating a multi-tenant POS system with varying network topologies, according to an example embodiment.
FIG. 8 is a flow diagram of another method for operation a multi-tenant POS system with varying network topologies, according to an example embodiment.

### Detailed Description

In the realm of retail technology, particularly in point-of-sale (POS) systems, multi-tenancy has traditionally presented significant challenges. Prior technologies in this field often involve solutions that are either overly rigid or excessively fragmented, requiring separate instances or adaptations for each tenant. This not only complicates system management and escalates costs but also impedes the swift roll-out of updates and integrations necessary for modern retail operations. Furthermore, these conventional systems frequently struggle to efficiently support varying network topologies, which is crucial for retailers operating across diverse locations with differing connectivity and infrastructure capabilities.

Embodiments of the invention presented herein revolutionize the approach to multi-tenancy in POS systems by introducing a unified architecture that utilizes a single code base across all tenants. This innovation significantly simplifies system management, reduces operational costs, and enhances the consistency of updates and feature deployments. Moreover, the embodiments adeptly support various network topologies through advanced distributed computing techniques and robust data synchronization mechanisms. By leveraging containerized microservices orchestrated via Kubernetes^{®}, the system ensures that each tenant's service is optimized for their specific network conditions, thereby maintaining high performance and reliability regardless of geographical disparities or infrastructural limitations. This comprehensive solution not only addresses the inherent limitations of previous systems but also sets a new standard for scalability and flexibility in multi-tenant POS systems.

The embodiments of the invention provide a single code base for multi-tenant POS systems by leveraging a unified architecture that centralizes the core functionalities while allowing for tenant-specific configurations. This approach eliminates the need for multiple versions of the software, which traditionally lead to fragmented and inconsistent system behavior across different tenants. By maintaining a single code base, the system ensures that all updates, enhancements, and bug fixes are uniformly applied, enhancing the overall security and functionality of the system. This architecture not only simplifies the maintenance and management of the system but also accelerates the deployment of new features and integrations, ensuring that all tenants can benefit from the latest advancements without delay.

Furthermore, the embodiments of the invention support varying network topologies through its flexible deployment model, which is designed to operate efficiently across both centralized and decentralized network environments. The system utilizes containerized microservices that can be dynamically deployed to either cloud-based infrastructures or on-premises, depending on the specific needs and conditions of each tenant. This adaptability is crucial for maintaining high levels of performance and availability, especially in scenarios where network connectivity may vary significantly. For instance, in areas with limited internet access or no internet access, the system can deploy more resources on-premises to ensure that the POS system remains operational and responsive. Conversely, in settings with robust internet connectivity, the system can leverage cloud services to optimize scalability and resource management.

By integrating Kubernetes^{®} for orchestration, the system further enhances its ability to manage these diverse deployments. Kubernetes^{®} facilitates the scaling and management of containerized applications across various environments, enabling the system to automatically adjust resources based on real-time demands and network conditions. This not only ensures optimal performance and cost-efficiency but also provides a seamless user experience across all operational scenarios. The use of Kubernetes^{®} also supports disaster recovery and business continuity strategies by allowing quick redeployment of services to alternative locations in the event of an outage or other network issues.

Overall, the embodiments of the invention provide a robust and flexible solution that addresses the core challenges of multi-tenancy and network variability in POS systems. By maintaining a single code base and supporting diverse network topologies, the system offers a scalable, efficient, highly available, and user-friendly platform that meets the evolving needs of modern retail environments.

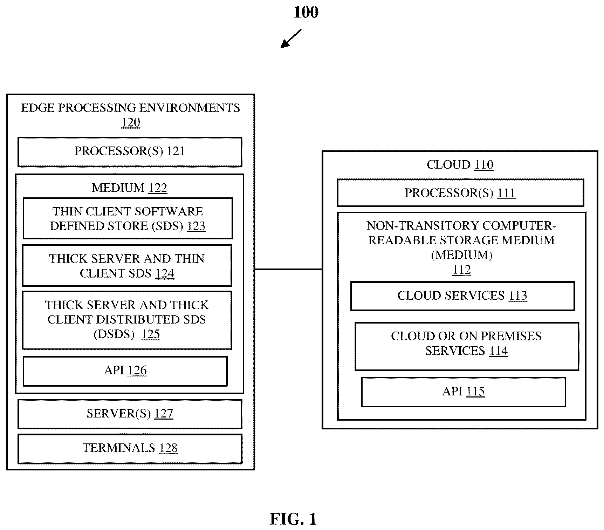

FIG. 1 is a diagram of a system for a multi-tenant POS system 100 that supports varying network topologies via a single code base, according to an example embodiment. Notably, the components are shown schematically in simplified form, with only those components relevant to understanding of the embodiments being illustrated.

Furthermore, the various components (that are identified in system 100) are illustrated and the arrangement of the components are presented for purposes of illustration only. Notably, other arrangements with more or less components are possible without departing from the teachings of a multi-tenant POS system 100 that supports varying network topologies via a single code base, presented herein and below.

System 100 includes a cloud 110 and a plurality of varying edge processing environments 120 with varying network topologies. Cloud 110 includes at least one processor 111 and a non-transitory computer-readable storage medium (hereinafter "medium") 112, which includes instructions for cloud services 113, cloud or on premises services 114, and an application programming interface (API) 115. The instructions when executed by processor 111 cause processor 111 to perform processing or operations discussed herein and below with respect to 113-115.

Each edge processing environment includes one or more of, or any combination of at least one processor 121 and at least one medium, which includes instructions for a thin client software defined store (SDS), a thick server and thin client SDS, a thick server and thick client distributed SDS (DSDS), and an API 126. The instructions when executed by processor 121 cause processor 121 to perform processing or operations discussed herein and below with respect to 123-126. Each edge processing environment also includes one or more of servers 127 and transaction terminals 128 (hereinafter just "terminals 128").

Cloud services 113 and cloud services or on premises services 114 are provided via a single master code base as microservices. The microservices are customized or changed via configurations and not via changes made to their master code source. The microservices are cloud native and tenant aware such that store nodes, servers 127 and/or terminals 128 become an extension of cloud 110. The microservices are deployable to any processing environment or device where it is necessary for business continuity in the event of network outages, device outages, slow network response times and/or slow device response times. For example, the microservices are deployable to any hosted cloud, such as cloud 110, store servers 127, and/or store terminals 128.

The microservices cooperate to provide a retail business with continuity of the functionality associated their POS system, which is needed to sell items or services to their customers with high availability and flexibility should any device and/or network issues be experienced by the business. By way of example only, the microservices include a complete fully operational POS system with payment microservices, loyalty microservices, fuel microservices, pharmacy microservices, merchandising microservices, monitoring microservices, authentication microservices, analytic microservices, self-service microservices, and others.

The microservices are unified and cooperate to provide a highly available and flexible POS system to a business. A business's edge devices are connected and interfaced across multiple channels (i.e., Omni-channel) via the microservices. For example, the unified POS system provided by a given business's configurations of the microservices allow edge devices associated with business channels for grocery, fuel, pharmacy, and a quick service restaurant. Should any given edge device fail or should network connectivity to cloud 110 fail, the microservices are flexibly and dynamically reconfigured to provide continuity in the business's POS system.

The single code base for the microservices utilize the same API 115. Moreover, inter-microservice communications are achieved via API 126 and API 115. The APIs 115 and 126 are based on open APIs that are well documented and make for seamless integration the third-party service providers used by a given business. Furthermore, the single code base provided initially as microservices from cloud 110 as cloud services 113 and cloud or on premises services 114 utilizes configurations rather than branching and changing code sources.

Each microservice supports, via its single code source, multiple tenants making the onboarding process seamless. Once onboarded to a business services layer (BSL), a business can immediately start using the microservices that provide the business with a highly available and unified POS system across all of the business's channels.

The microservices are containerized and orchestration is achieved utilizing Kubernetes^{®}. This allows the microservices to be executed on any operating system (OS) and any processing device such as cloud 110, store servers 127, and store terminals 128. APIs 115 and 126 are JavaScript Object Notation^{®} (JSON) and representational state transfer (REST) compliant. As such, system 100 implements a modern containerized OS-independent stack.

System 100 channels data from the cloud 110 to the edge processing environments 120 without requiring the data to adhere to any predefined schemas. This removes roadblocks in deploying new features and new data, which a business needs in the evolving nature of the industry. Therefore, system 100 utilizes a schema agnostic data synchronization.

Each workload in a business's unified POS system is containerized and managed by Kubernetes^{®} (K8S). A given workload includes one or more microservices necessary to process the workload. Each microservice in the workload respects the platform tenant identifier for data isolation including API level e.g., use of relevant headers, etc.), code level (e.g., process each request in the correct tenant, store and POS group context, etc.), memory state isolation (e.g., static fields, dependency injection, etc.), database level (e.g., either database instance or discriminating database table column, etc.), distributed caching level (e.g., keep each unit of data in a dedicated context, etc.). Stateless PODs (i.e., smallest deployable unit of computing in K8S) are used ensuring dynamic and flexible scaling. Master and slave approaches are used for databases for efficient caching and memory footprints are maintained to remain under 8 GBs. Each business configuration is deployed, monitored, and the corresponding business's transaction data are data synchronized.

Each business is capable of having one to three configurations for their unified multi-tenant POS system via business specific configurations utilizing a single code base. Furthermore, the business can have combinations of all three configurations. Each of the three primary configurations are provided via the thin client SDS 123, the thick server and thin client SDS 124, and the thick server and thick client DSDS 125. In an embodiment, the cloud or on-premises services 114 use identical APIs 115. Having the same API contracts and authorization mechanisms makes interaction in the cloud 120 and in the edge processing environments 120 seamless for clients or tenants.

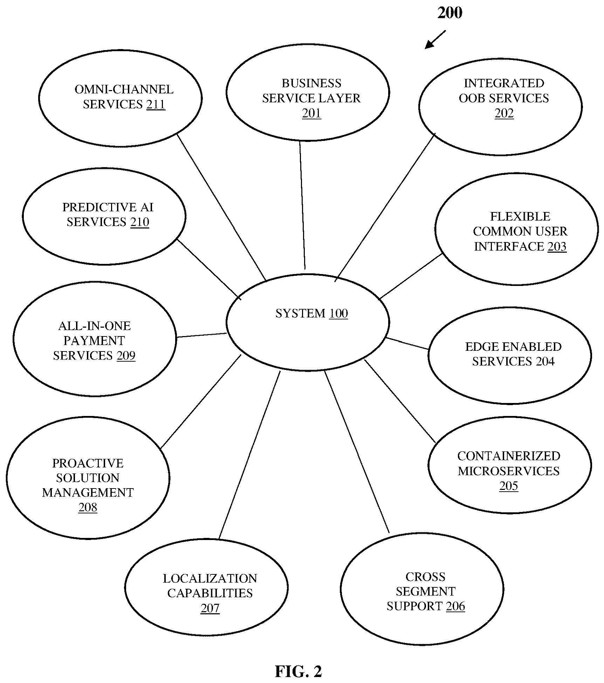

FIG. 2 is a diagram depicting capabilities and services 200 provided from and supported by the multi-tenant POS system of FIG. 1, according to an example embodiment. The microservices and configurations of the microservices provide a BSL 201, integrated out-of-box (OOB) services 202, a flexible common user interface 203, edge enabled services 204, containerized microservices 205, cross-segment support 206, localization capabilities 207, proactive solutions management 208, all-in-one payment services 209, predictive Al and analytic services 210, and Omni-channel services 211. Because APIs 115 and 126 are based on open standards, any third-party service required by a given business is easily and seamlessly integrated into the business's microservices' configurations for their unified Omni-channel and multi-tenant POS system, which is derived from a single code base and supports varying network topologies.

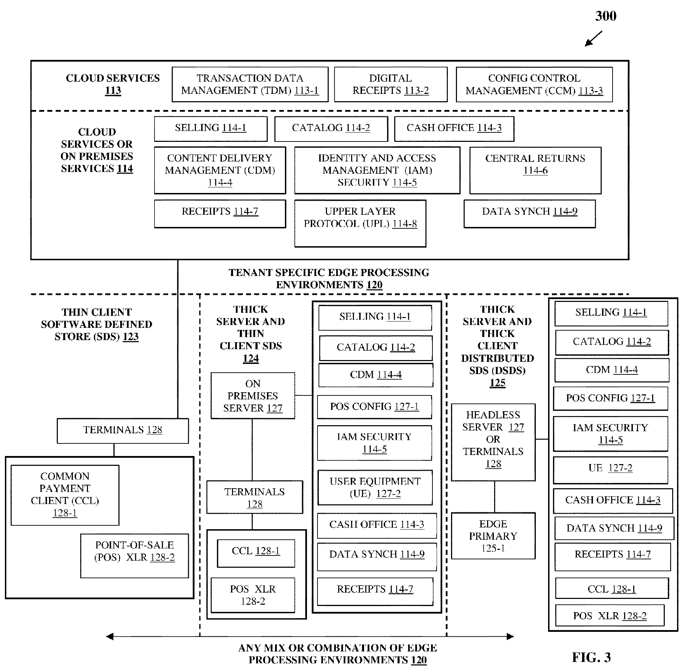

FIG. 3 is a diagram of an architecture 300 for the multi-tenant POS system of FIG. 1 depicting varying network topologies, according to an example embodiment. Cloud 110 includes cloud services 113, which include microservices for transaction data management (TDM) 113-1, digital receipts 113-2, and configuration control management CCM 113-3. Cloud 110 also includes cloud or on premises services 114, which include microservices for selling 114-1, item product catalog 114-2, cash office 114-3, content delivery management (CDM) 114-4, identity and access management (IAM) 114-5, central item returns 114-6, receipts 114-7, upper layer protocol *UPL) 114-8, and data synch 114-9.

The edge processing environments 120 include 1 or more of the three primary configurations for the microservices. The first network topology is supported by the configured microservices associated with the thin client SDS 123. In this network topology, one or more terminals 128 include a common payment client (CCL) 128-1 and a POS XLR 128 (i.e., extended POS communication microservice 128-2 utilizing API 126). Here, the microservices are hosted on cloud 110.

The second network topology is supported by configured microservices associated with the thick server and thin client SDS. Here, the on premises store server 127 hosts the microservices, which include selling 114-1, catalog 114-2, CDM 114-4, POS configuration 127-1, IAM security 114-5, user equipment (UE) 127-2, cash office 114-3, data synch 114-9, and receipts 114-7. The thin client terminals 128 in this network topology include the CCL 128-1 and the POS XLR 128-2.

The third network topology is supported by configured microservices associated with the thick server and thick client DSDS 125. Here, either a headless on-premises store server 127 or the terminals 128 hosts the microservices, which include selling 114-1, catalog 114-2, CDM 114-4, POS config 114-4, IAM security 114-5, UE 127-2, cash office 114-3, data synch 114-9, receipts 114-7, CCL 128-1, and POS XLR 128-2. The headless server 127, a single terminal 128, or a collection of cooperating terminals 128 process as the edge primary 125-1 for the edge processing environment 120 illustrated by the third network topology.

Notably, a single store can deploy a mixture of the network topologies utilizing any mixture of the microservice configurations for the thin client SDS 123, the thick server and thin client SDS, and/or the thick server and thick client DSDS 125. Furthermore, when network or device problems are detected, the business can switch to a different network topology to maintain continuity of the business and high availability of their unified and multi-tenant POS system supported by a single code base. In an embodiment, the switch to a new network topology is done based on a configuration file, via a dashboard interface, or via an API. In an embodiment, an artificial intelligence application or service evaluates network conditions and network resources and dynamically switches to a new network topology.

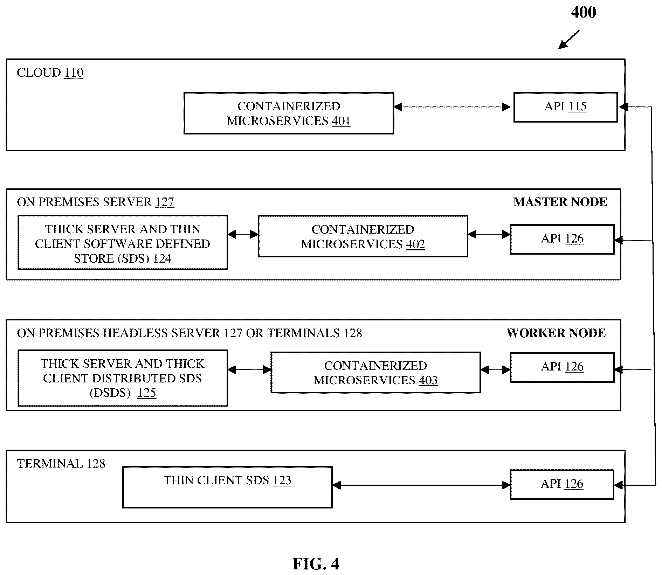

FIG. 4 is a diagram depicting the interactions 400 of microservices for the various network topologies of the multi-tenant POS system of FIG. 1, according to an example embodiment. The cloud 110 provides the containerized microservices 401 and interacts with other microservices and network topologies utilizing API 115. The thick server and thin client SDS of an on premises server 127 utilizes containerized microservices 402 and interacts with other microservices and network topologies utilizing API 126. The on premises headless server 127 or terminals 128 of the thick server and thick client DSDS utilizes the containerized microservices 403 and interacts with other microservices and network topologies utilizing API 126. Each terminal of the thin client SDS 123 utilizes containerized microservices 123 and interacts with other microservices and network topologies utilizing API 126.

Notably, when a network or device issue is encountered, a different and operational network topology is initiated to maintain high available of business operations. In an embodiment, switching to a new network topology is performed dynamically and in real time such that it appears transparent to the business. In an embodiment, when a store server or network issue is encountered making an existing network topology unusable, a thick terminal configuration for the network topology can automatically switch to self-contained operation, making it a cluster master node and ensuring essential microservices are kept available.

System 100 provides a flexible, dynamic, and unified multi-tenant POS system that supports varying network topologies across multiple channels utilizing a single code base. As a result, customizations for any given POS system is made via configurations and not via source code changes. A given business can operate their unified muti-tenant POS system very light utilizing more of cloud 110 or very robust utilizing a combination of the cloud and their own on premises servers 127 and/or terminals 128. Furthermore, system 100 provides high available of a business's configured POS system such that the business can use a thin-thick mixture to balance local resources and business continuity needs when problems are encountered that impact business continuity based on network or edge device problems. The system is dynamically scalable and containerized for efficiency.

System 100 not only enhances operational efficiency but also reduces maintenance and upgrade expenses associated with maintaining multiple operational network topologies for POS systems. Further, retailers can experience smoother operations, especially during peak sales periods, as the system 100 adjusts to network conditions and hardware performance without manual intervention. This reliability ensures that customer transactions are processed swiftly and accurately, enhancing the overall shopping experience and potentially increasing customer loyalty due to reduced wait times and service disruptions.

Unlike traditional single-tenant POS systems, which often require significant downtime for maintenance or fail to provide seamless performance across different network conditions, system 100 introduces a robust solution that adapts in real-time to varying network topologies. Traditional systems typically involve complex and time-consuming configurations for each tenant and each store, leading to increased operational costs and potential for human error. I n contrast, System 100 utilizes a unified code base and containerized microservices, allowing for instant adjustments and updates across all tenants without the need for individualized attention, thereby streamlining operations and reducing the likelihood of errors.

Consider a scenario where a retail chain encounters a sudden network outage at one of its busiest locations during a holiday sale. With traditional POS systems, this could lead to transaction delays or even complete service halts, significantly impacting sales and customer satisfaction. System 100, however, detects the issue and switches to an on-premises operation mode based on direction provided through a dashboard interface, an API, a configuration file, or self-management actions of an artificial intelligence application or service; ensuring that sales continue smoothly without interruption. Kubernetes^{®} handles a topology or server failure to keep smooth operation; terminals can use microservices on other nodes/devices or be switched to work with cloud services. Such capabilities demonstrate System 100's practical application in real-world retail environments, providing tangible benefits to businesses by maintaining operational resilience.

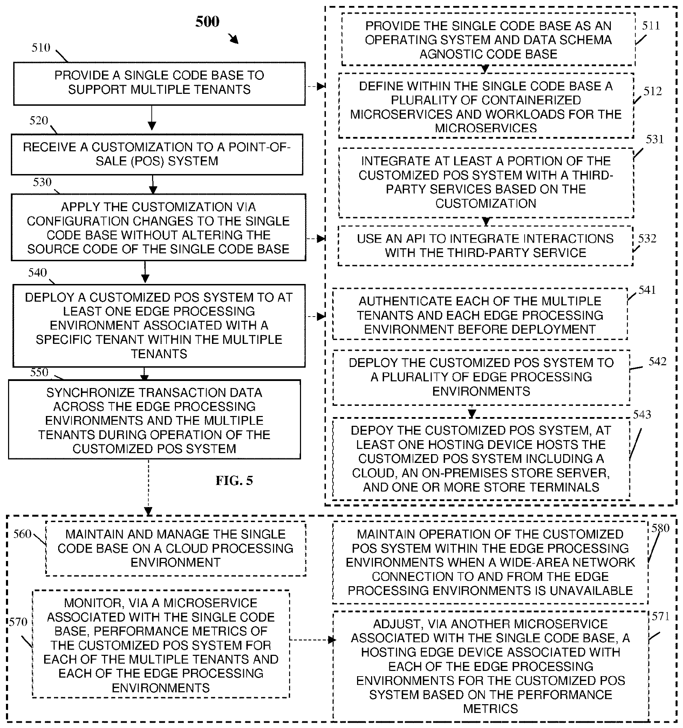

The above-referenced embodiments and other embodiments are now discussed with reference to FIGS. 5-8. FIG. 5 is a flow diagram of a method 500 for providing and operating a multi-tenant POS system via a single code base, according to an example embodiment. The software module(s) that implements the method 500 is referred to as a "flexible POS orchestrator." The flexible POS orchestrator is implemented as executable instructions programmed and residing within memory and/or a non-transitory computer-readable (processor-readable) storage medium and executed by one or more processors of one or more devices. The processor(s) of the device(s) that executes the flexible POS orchestrator are specifically configured and programmed to process the flexible POS orchestrator. The flexible POS orchestrator may have access to one or more network connections during its processing. The network connections can be wired, wireless, or a combination of wired and wireless.

In an embodiment, the devices that execute the flexible POS orchestrator is cloud 110, servers 127, and/or terminals 127. In an embodiment, the flexible POS orchestrator is cloud services 113, cloud or on premises services 114, API 115, thin client SDS 123, thick server and thin client SDS 124, thick server and thick client DSDS 124, and/or API 126.

At 510, the flexible POS orchestrator provides a single code base configured to support multiple tenants. That is, source codes associated with the single code base is not changed for customizations; rather, custom configurations are performed to customize instances of the single code base.

In an embodiment, at 511, the flexible POS orchestrator provides the single code base as an operating system and a data schema agnostic code base. In an embodiment of 511 and at 512, the flexible POS orchestrator defines within the single code base a plurality of containerized microservices and workloads for the microservices.

At 520, the flexible POS orchestrator receives a customization to a POS system. The customization defines and/or is mapped to specific configuration settings for the POS system.

At 530, the flexible POS orchestrator applies the customization via configuration changes to the single code base without altering a source code or source codes of the single code base. In an embodiment, at 531, the flexible POS orchestrator integrates at least a portion of the customized POS system with a third-party service based on the customization. In an embodiment of 531 and at 532, the flexible POS orchestrator uses an API to integrate interactions with a third-party service within the portion of the customized POS system.

At 540, the flexible POS orchestrator deploys a customized POS system to at least one edge processing environment associated with a specific tenant within the multiple tenants. In an embodiment, at 541, the flexible POS orchestrator authenticates each of the multiple tenants and each edge processing environment before deploying, at 540, the customized POS system.

In an embodiment, at 542, the flexible POS orchestrator deploys the customized POS system to a plurality of edge processing environments associated with the customization. In an embodiment, at 543, the flexible POS orchestrator deploys the customized POS system to each edge processing environment. Each edge processing environment includes at least one hosting device. The hosting device includes one or more of a cloud processing environment, an on-premises store server, and one or more store terminals.

At 550, the flexible POS orchestrator synchronizes transaction data across the edge processing environments and the multiple tenants during operation of the customized POS system. This ensures data integrity and real-time data updates during operation of the POS system.

In an embodiment, at 560, the flexible POS orchestrator maintains and manages the single code base on a cloud processing environment. That is, the single code base remains under control of the cloud processing environment and instances of POS systems are derived, deployed, and initiated based on customizations and configurations to the single code base.

In an embodiment, at 570, the flexible POS orchestrator monitors, via a microservice associated with the single code base, [performance metrics of the customized POS system for each of the multiple tenants and each of the edge processing environments. In an embodiment of 570 and at 571, the flexible POS orchestrator adjusts, via another microservice associated with the single code base, a hosting edge device associated with an edge processing environment for the customized POS system based on the performance metrics.

In an embodiment, at 580, the flexible POS orchestrator maintains operation of the customized POS system within at least one edge processing environment when a wide-area network connection to and from the edge processing environment is unavailable. This ensures continuity of transaction operations for a store associated with the customized POS system.

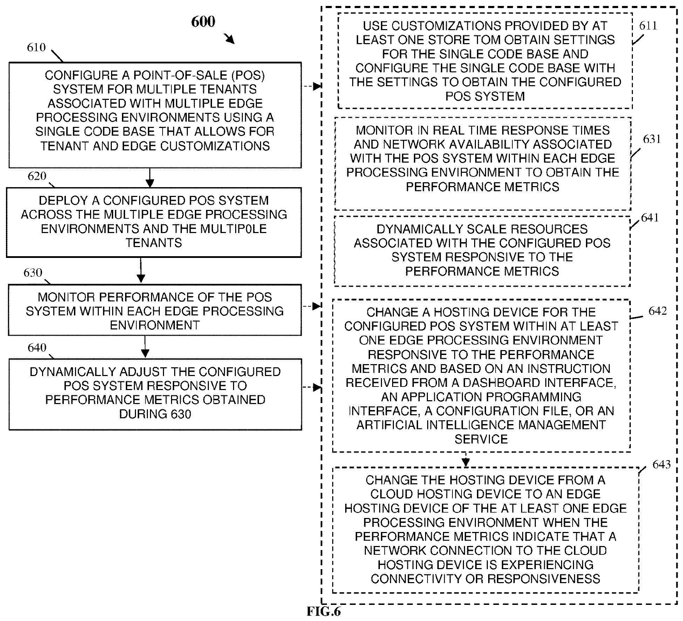

FIG. 6 is a flow diagram of another method 600 for providing and operating a multi-tenant POS system via a single code base, according to an example embodiment. The software module(s) that implements the method 600 is referred to as a "single code based unified multi-tenant POS manager." The single code based unified multi-tenant POS manager is implemented as executable instructions programmed and residing within memory and/or a non-transitory computer-readable (processor-readable) storage medium and executed by one or more processors of one or more device(s). The processors that execute the single code based unified multi-tenant POS manager are specifically configured and programmed for processing the single code based unified multi-tenant POS manager. The single code based unified multi-tenant POS manager may have access to one or more network connections during its processing. The network connections can be wired, wireless, or a combination of wired and wireless.

In an embodiment, the devices that execute the single code based unified multi-tenant POS manager is cloud 110, servers 127, and/or terminals 127. In an embodiment, the single code based unified multi-tenant POS manager is cloud services 113, cloud or on premises services 114, API 115, thin client SDS 123, thick server and thin client SDS 124, thick server and thick client DSDS 124, API 126 and/or method 500. In an embodiment, the single code based unified multi-tenant POS manager presents another and, in some ways, and enhanced processing perspective from that which was described above for method 500 of FIG. 5.

At 610, the single code based unified multi-tenant POS manager configures a POS system for multiple tenants associated with multiple edge processing environments using a single code base that allows for tenant and edge specific customizations. In an embodiment, at 611, the single code based unified multi-tenant POS manager uses customizations provided by at least one store to obtain settings for the single code base and configure the single code base with the settings to obtain the configured POS system.

At 620, the single code based unified multi-tenant POS manager deploys a configured POS system across the multiple edge processing environments and the multiple tenants. This provides high availability and flexibility to ensure continuous and uninterrupted operation of the configured POS system.

At 630, the single code based unified multi-tenant POS manager monitors performance of the configured POS system within each edge processing environment. In an embodiment, at 631, the single code based unified multi-tenant POS manager monitors in real time response times and network availability associated with the configured POS system within each edge processing environment to obtain the performance metrics.

At 640, the single code based unified multi-tenant POS manager dynamically adjusts the configured POS system responsive to performance metrics obtained during the monitoring. In an embodiment, at 641, the single code based unified multi-tenant POS manager dynamically scales resources associated with the configured POS system responsive to the performance metrics.

In an embodiment, at 642, the single code based unified multi-tenant POS manager changes a hosting device for the configured POS system within at least one edge processing environment responsive to the performance metrics. In an embodiment of 642 and at 643, the single code based unified multi-tenant POS manager changes the hosting device from a cloud hosting device to an edge hosting device of at least one edge processing environment when the performance metrics indicate that a network connection to the cloud hosting device is experiencing connectivity or responsiveness problems. This is based on an instruction received from a dashboard interface, an API, a configuration file, or an artificial intelligence management service

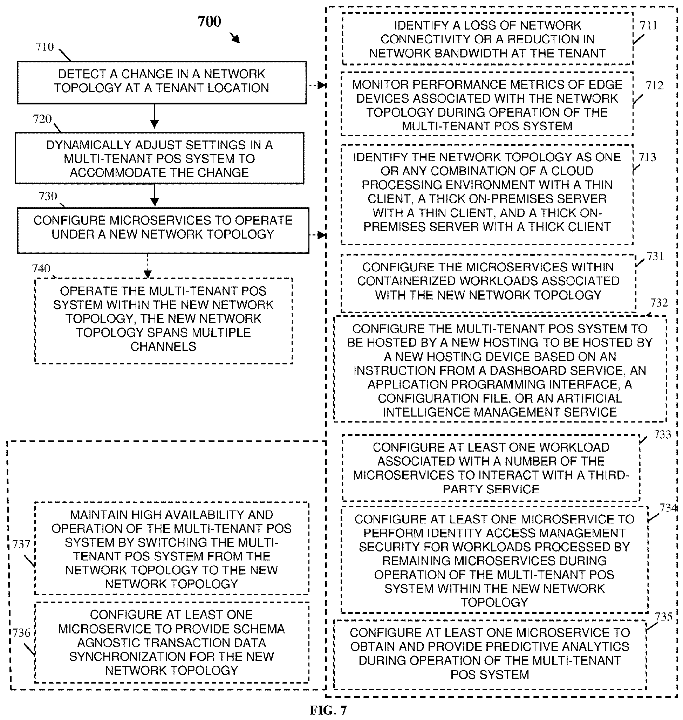

FIG. 7 is a flow diagram of a method 700 for operating a multi-tenant POS system with varying network topologies, according to an example embodiment. The software module(s) that implements the method 700 is referred to as a "dynamic multi-tenant POS system manager." The multi-tenant POS system manager is implemented as executable instructions programmed and residing within memory and/or a non-transitory computer-readable (processor-readable) storage medium and executed by one or more processors of one or more device(s). The processors that execute the multi-tenant POS system manager are specifically configured and programmed for processing the dynamic multi-tenant POS system manager. The multi-tenant POS system manager may have access to one or more network connections during its processing. The network connections can be wired, wireless, or a combination of wired and wireless.

In an embodiment, the devices that execute the multi-tenant POS system manager is cloud 110, servers 127, and/or terminals 127. In an embodiment, the multi-tenant POS system manager is cloud services 113, cloud or on premises services 114, API 115, thin client SDS 123, thick server and thin client SDS 124, thick server and thick client DSDS 124, and/or API 126.

At 710, the multi-tenant POS system manager detects a change in network topology at a tenant location. In an embodiment, at 711, the multi-tenant POS system manager identifies a loss of network connectivity or a reduction in network bandwidth at the tenant location.

In an embodiment, at 712, the multi-tenant POS system manager monitors performance metrics of edge devices associated with the network topology during operation of the multi-tenant POS system. In an embodiment, at 713, the multi-tenant POS system manager identifies the network topology as one or any combination of a cloud processing environment with a thin client, a thick on-premises server with a thin client, and a thick on-premises server with a thick client.

At 720, the multi-tenant POS system manager adjusts settings in a multi-tenant POS system to accommodate the change. Again, this ensures the multi-tenant POS system is adjusted to ensure operation of the multi-tenant POS system and business continuity. In an embodiment, the change is performed based on instruction received through a dashboard interface or an API. In an embodiment, the change is performed dynamically and in real time based on actions of an artificial intelligence service that manages the resources and network topology switching.

At 730, the multi-tenant POS system manager configures microservices to operate under a new network topology. In an embodiment, at 731, the multi-tenant POS system manager configures the microservices within containerized workloads associated with the new network topology.

In an embodiment, at 732, the multi-tenant POS system manager configures the multi-tenant POS system to be hosted by a new hosting device based on an instruction from a dashboard service, an application programming interface, a configuration file, or an artificial intelligence management service. In an embodiment, at 733, the multi-tenant POS system manager configures at least one workload associated with a number of the microservices to interact with a third-party services.

In an embodiment, at 734, the multi-tenant POS system manager configures at least one microservices to perform identity access management security for workloads processed by remaining microservices during operation of the multi-tenant POS system within the new network topology. In an embodiment, at 735, the multi-tenant POS system manager configures at least one microservice to obtain and provided predictive analytics during operation of the multi-tenant POS system within the new network topology.

In an embodiment, at 736, the multi-tenant POS system manager configures at least one microservice to provide schema agnostic transaction data synchronization for the new network topology. In an embodiment at 737, the multi-tenant POS system manager maintain high availability and operation of the multi-tenant POS system by switching the multi-tenant POS system from the network topology to the new network topology.

In an embodiment, at 740, the multi-tenant POS system manager operates the multi-tenant POS system within the new network topology. The new network topology spans multiple Omni-based channels.

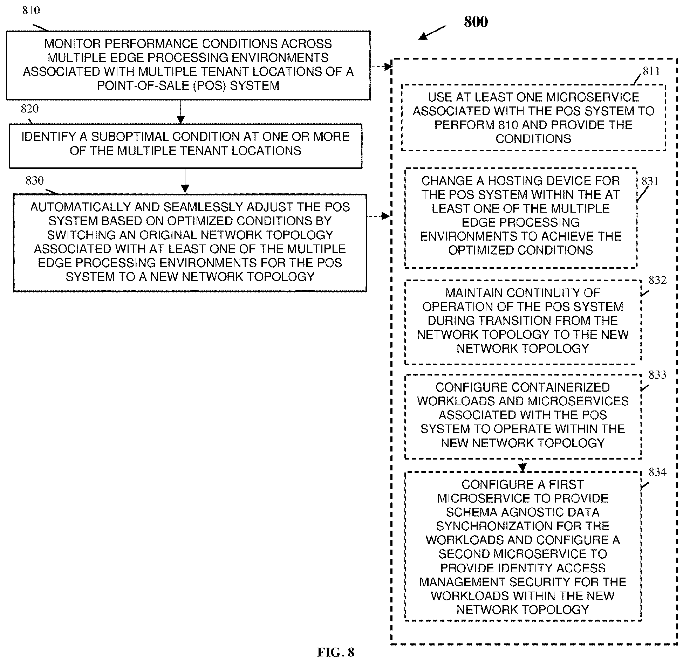

FIG. 8 is a flow diagram of another method 800 for operation a multi-tenant POS system with varying network topologies, according to an example embodiment. The software module(s) that implements the method 800 is referred to as a "varying network topology POS system manager." The varying network topology POS system manager is implemented as executable instructions programmed and residing within memory and/or a non-transitory computer-readable (processor-readable) storage medium and executed by one or more processors of one or more device(s). The processors that execute the varying network topology POS system manager are specifically configured and programmed for processing the varying network topology POS system manager. The varying network topology POS system manager may have access to one or more network connections during its processing. The network connections can be wired, wireless, or a combination of wired and wireless.

In an embodiment, the devices that execute the varying network topology POS system manager is cloud 110, servers 127, and/or terminals 127. In an embodiment, the varying network topology POS system manager is cloud services 113, cloud or on premises services 114, API 115, thin client SDS 123, thick server and thin client SDS 124, thick server and thick client DSDS 124, API 126 and/or method 700. In an embodiment, the varying network topology POS system manager presents another and, in some ways, and enhanced processing perspective from that which was described above for method 700 of FIG. 7.

At 810, the varying network topology POS system manager monitors performance conditions across multiple edge processing environments associated with multiple tenant locations associated with a POS system. In an embodiment, at 811, the varying network topology POS system manager uses at least one microservice associated with the POS system to perform the monitoring and provide the conditions.

At 820, the varying network topology POS system manager identifies a suboptimal condition at one or more of the multiple tenant locations. The suboptimal condition is an indication that business continuity of operations for the POS system is experiencing issues or problems that could result in loss of operations.

At 830, the varying network topology POS system manager automatically and seamlessly adjusts the POS system based on optimized conditions by switching an original network topology associated with at least one of the multiple edge processing environments for the POS system to a new network topology. In an embodiment, at 831, the varying network topology POS system manager changes a hosting device for the POS system within at least one of the multiple edge processing environments to achieve the optimized conditions.

In an embodiment, at 832, the varying network topology POS system manager maintains continuity of operation of the POS system during transition from the network topology to the new network topology. In an embodiment, at 833, the varying network topology POS system manager configures containerized workloads and microservices associated with the POS system to operate within the new network topology. In an embodiment of 833 and at 834, the varying network topology POS system manager configures a first microservice to provided schema agnostic data synchronization and configures a second microservice to provide identity and access management security for the workloads within the new network topology.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method, comprising:
providing a single code base configured to support multiple tenants;
receiving a customization to a point-of-sale (POS) system;
applying the customization via configuration changes to the single code base without altering a source code of the single code base;
deploying a customized POS system to at least one edge processing environment associated with a specific tenant of the multiple tenants; and
synchronizing transaction data across the at least one edge processing environment and the multiple tenants during operation of the customized POS system.

2. The method of claim 1, further comprising maintaining and managing the single code base on a cloud processing environment.

3. The method of claim 1 or claim 2, further comprising monitoring, via a microservice associated with the single code base, performance metrics of the customized POS system for each of the multiple tenants and each of the edge processing environments.

4. The method of claim 3, further comprising adjusting, via another microservice associated with the single code base, a hosting edge device associated with each of the edge processing environments for the customized POS system based on the performance metrics.

5. The method of any preceding claim, further comprising maintaining operation of the customized POS system within the at least one edge processing environment when a wide-area network connection to and from the at least one edge processing environment is unavailable.

6. The method of any preceding claim, wherein providing further includes providing the single code base as an operating system and a data schema agnostic code base; and optionally
wherein providing further includes defining within the single code base a plurality of containerized microservices and workloads for the microservices.

7. The method of any preceding claim, wherein applying further includes integrating at least a portion of the customized POS system with a third-party service based on the customization; and optionally
wherein integrating further includes using an application programming interface to integrate interactions with the third-party service within the at least a portion of the customized POS system.

8. The method of any preceding claim, wherein deploying further includes authenticating each of the multiple tenants and each edge processing environment before deploying the customized POS system.

9. The method of any preceding claim, wherein deploying further includes deploying the customized POS system to a plurality of edge processing environments associated with the customization; and optionally
wherein deploying further includes deploying the customized POS system to each edge processing environment with each edge processing environment including at least one hosting device that hosts the customized POS system, wherein the at least one hosting device includes one or more of a cloud processing environment, an on premises store server, and one or more store terminals.

10. A method, comprising:
configuring a point-of-sale (POS) system for multiple tenants associated with multiple edge processing environments using a single code base that allows for tenant and edge specific customizations;
deploying a configured POS system across the multiple edge processing environments and the multiple tenants;
monitoring performance of the configured POS system within each edge processing environment; and
dynamically adjusting the configured POS system responsive to performance metrics obtained during the monitoring.

11. The method of claim 10, wherein configuring further includes using customizations provided by at least one store to obtain settings for the single code base and configuring the single code base with the settings to obtain the configured POS system.

12. The method of claim 10 or claim 11, wherein monitoring further includes monitoring in real time response times and network availability associated with the configured POS system within each edge processing environment to obtain the performance metrics; and/or
wherein dynamically adjusting further includes dynamically scaling resources associated with the configured POS system responsive to the performance metrics.

13. The method of any one of claims 10 to 12, wherein dynamically adjusting further includes changing a hosting device for the configured POS system within at least one edge processing environment responsive to the performance metrics and based on an instruction received from a dashboard interface, an application programming interface, a configuration file, or an artificial intelligence management service; and optionally
wherein changing further includes changing the hosting device from a cloud hosting device to an edge hosting device of the at least one edge processing environment when the performance metrics indicate that a network connection to the cloud hosting device is experiencing connectivity or responsiveness problems.

14. A system, comprising:
at least one processor and a non-transitory computer-readable storage medium having stored instructions which, when executed by the at least one processor, cause the at least one processor to:
maintain a single code base that supports multiple tenants of multiple edge processing environments;
receive a customization from the single code base;
configure the single code base with the customization to create a configured point-of-sale (POS) system;
deploy the configured POS system to the multiple edge processing environments and the multiple tenants; and
synchronize operational data associated with the configured POS system across the multiple edge processing environments and the multiple tenants as the configured POS system operates within the multiple edge processing environments.

15. The system of claim 14, wherein the at least one processor is further configured to:
integrate workloads associated with the configured POS system with external application programming interfaces (APIs) for seamless data exchange and functionality extension with third-party services used by the multiple tenants and the multiple edge processing environments.
